# EUROPEAN PATENT SPECIFICATION

(11) **EP 1 556 285 B1**
(45) Date of publication and mention of the grant of the patent: **07.05.2008**
(21) Application number: 03809948.7
(22) Date of filing: 17.10.2003
(51) Int. Cl.: B65D 65/14, B65D 65/38, C09J 7/02

(54) **MULTIFUNCTIONAL ADHESIVE FOOD WRAPS**
MULTIFUNKTIONALE KLEBENDE LEBENSMITTELVERPACKUNG
PAPIER D'EMBALLAGE ADHESIF MULTIFONCTIONNEL POUR ALIMENTS

(30) Priority: 25.10.2002 US 421345 P
(43) Date of publication of application: 27.07.2005
(73) Proprietor: THE PROCTER & GAMBLE COMPANY, Cincinnati, Ohio 45202 (US)
(72) Inventor: HAMILTON, Peter, Worthington, Cincinnati, OH 45233 (US); MCGUIRE, Kenneth, Stephen, Cincinnati, OH 45242 (US); WNUK, Andrew, Julian, Wyoming, OH 45215 (US); ZIMMERMAN, Dean, Arthur, West Chester, OH 45069 (US); DINIUS, Cynthia, Sue, Cincinnati, OH 45241 (US); TROKHAN, Paul, Dennis, Hamilton, OH 45013 (US); MCNEIL, Kevin, Benson, Loveland, OH 45140 (US); BARNHOLTZ, Steven, Lee, West Chester, OH 45069 (US); BERNING, Carol, Kohn, Cincinnati, OH 45247 (US)
(74) Representative: Canonici, Jean-Jacques
(86) International application number: PCT/US2003/032864
(87) International publication number: WO 2004/039683

(56) References cited:
- WO-A-01/70897
- US-A- 3 314 838
- US-A- 5 716 715
- US-A- 5 871 607
- US-A- 5 965 235
- US-B1- 6 299 966

## Description

### FIELD OF THE INVENTION

The present invention relates to improved adhesive food wraps having multiple benefits.

### BACKGROUND OF THE INVENTION

Adhesive film materials which include a thin layer of pressure-sensitive adhesive are well known and have been described in detail. Embodiments of adhesive film materials with improved sealing characteristics over traditional wrap materials have been disclosed in the art.

A multifunctional adhesive food wrap is disclosed in US 6 299 966 B1. The food wrap comprises a first surface having an embossed area including a plurality of protrusions forming a plurality of raised contact surfaces and a base surface, wherein the total contact area of said raised contact surfaces is less than about 10 percent of the total surface area of the embossed area. An adhesive is applied to cover at least 80 percent of the embossed area. The wrap is suitable for direct food contact and is sufficiently heat resistant for microwave heating.

However, as consumers have become more sophisticated, they demand more from their wrap products. A high quality sealing wrap does not provide all the benefits needed for the storage of perishable products. In addition to providing a robust seal, adhesive film materials are desirable which enhance the preservation of perishable products, or which eliminate odors inside the sealed container or from the outside environment, or which provide the consumer an indication when the perishable product has spoiled, or which prevent freezer bum, or provide an indicator that the contained products have reached a desirable temperature, or enhances the flavor of wrapped food, or eliminates reduces moisture or uses moisture to enhance sealing, or enhances microwave cooking, or insulates the product during storage.

Accordingly, it would be desirable to provide consumers with an adhesive food storage wrap which also provides a secondary benefit.

### SUMMARY OF THE INVENTION

The present invention is a multifunctional food wrap according to claim 1.

The present invention is also a multifunctional food wrap according to claim 7.

Additionally, the present invention is a multifunctional food wrap according to claim 11.

### BRIEF DESCRIPTION OF THE DRAWINGS

FIG. 1 is a cross-sectional view of an exemplary multifunctional wrap of the present invention;
FIG. 2 is a cross-sectional view of another multifunctional wrap;
FIG. 3 is a cross-sectional view of an exemplary material web;
FIG. 4 is a cross-sectional view of yet another multifunctional wrap;
FIG. 5 is a cross-sectional view of another multifunctional food wrap;
FIG. 6 is a cross-sectional view ofan additional multifunctional food wrap;
FIG. 7 is a cross-sectional view of a further multifunctional food wrap; and,
FIG. 8 details an exemplary process to make the multifunctional food wrap of FIG.1.

### DETAILED DESCRIPTION OF THE INVENTION

The present invention relates to multifunctional food wraps comprising a material web, an adhesive, and at least one secondary function.

### MULTI-FUNCTIONAL FOOD WRAP

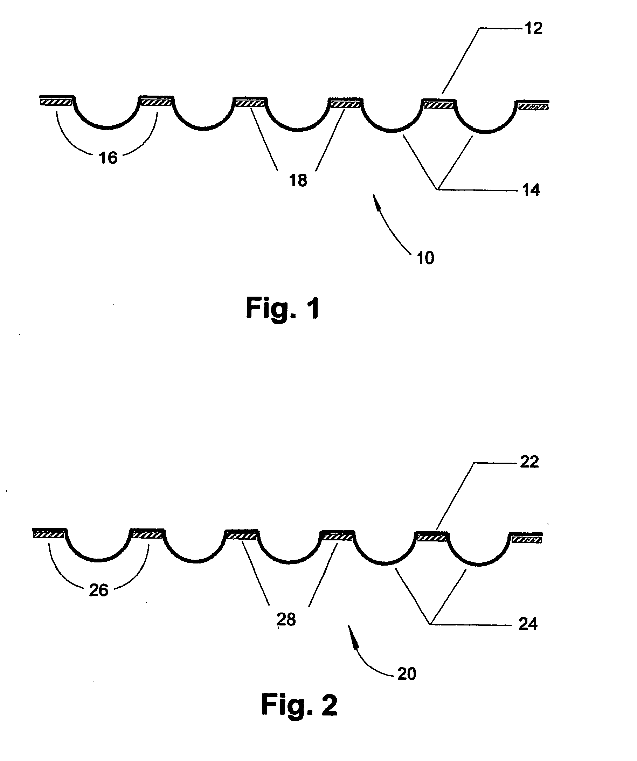

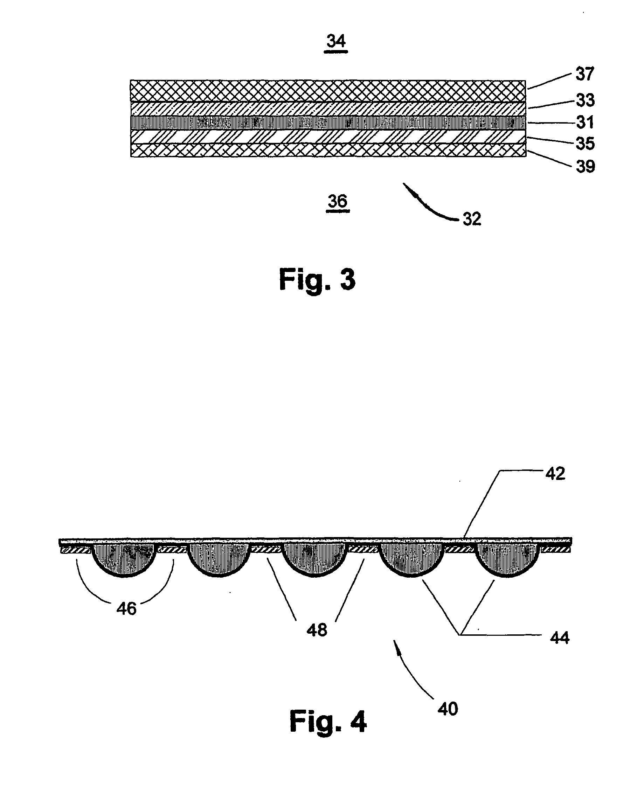

As shown in FIG. 1, a multifunctional food wrap 10 can be provided as an embossed material web 12 having protrusions 14 and valleys 16 therebetween. An adhesive 18 comprising a secondary function is disposed in the valleys 16. Alternatively, as shown in FIG. 2, a multifunctional food wrap 20 can be provided as an embossed material web 22 having protrusions 24 and valleys 26 therebetween, An adhesive 28 is disposed in the valleys 26 between the protrusions 22. The web material 22 can comprise a secondary function. As shown in the non-limiting example represented by FIG. 3, a web material 32 can be provided as a coextruded film whereby layer 31 is a barrier material, layers 33 and 35 are tie layers and outer layers 37 and 39 are polyolefins. A secondary function can be incorporated into any of barrier material 31, tie layers 33 and 35, outer layers 37 and 39, or any combination thereof. One of skill in the art will realize that a secondary function can be included into laminated material webs, laminated-coextruded material webs, single-layer web materials, or into any other web materials suitable for use as a food wrap.

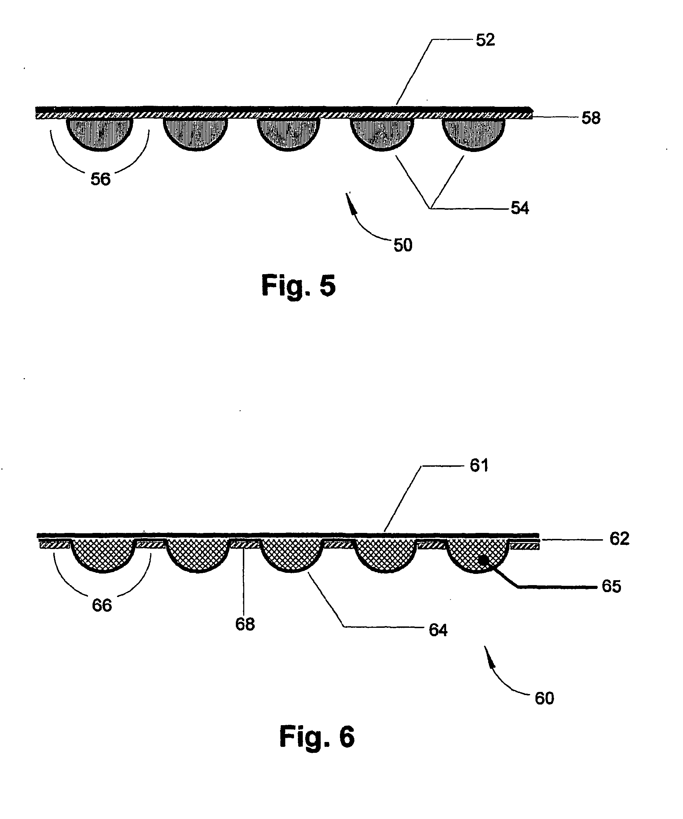

As shown in FIG. 4, the multifunctional food wrap 40 of the present invention can be provided as a web material 42 having a plurality of protrusions 44 having a secondary function deposited thereon. The plurality of protrusions can be deposited upon web material to provide valleys 46 therebetween. An adhesive 48 is deposited in the valleys 46 of multifunctional food wrap 40, Alternatively, as shown in FIG. 5, a plurality of protrusions 54 having a secondary function deposited therein can be disposed upon web material 52 that has a continuous layer of adhesive 58 disposed thereon. The plurality of protrusions 54 can be disposed upon the continuous layer of adhesive 58 to form valleys 56.

In yet another embodiment, as shown in FIG. 6, a multifunctional food wrap 60 can be provided as a material web 62 having protrusions 64 containing a secondary function 65 and having valleys 66 therebetween. Material web 62 is provided as a permeable material. An adhesive 68 is disposed within valleys 66. Material web 62 can then be disposed upon an unembossed substrate 61 using techniques known to those of skill in the art.

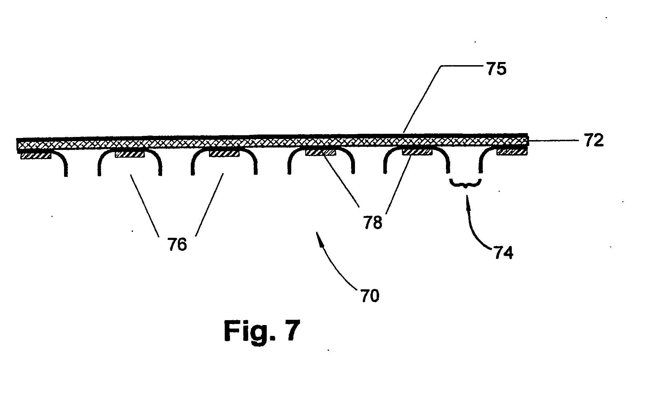

In a further embodiment, as shown in FIG. 7, a multifunctional food wrap 70 can be provided as a plurality of embossed protrusions 74 having valleys 76 therebetween. An adhesive 78 is disposed within valleys 76. The embossed web of protrusions is disposed upon a secondary web substrate 72 that can provide the secondary function. The secondary function can be applied to the unembossed substrate 72 neat or be disposed within, or coextensive with unembossed substrate 72. Unembossed substrate 72 can be bonded to backsheet (or capping substrate) 75 if necessary and by any means of attachment known to one of skill in the art. The plurality of embossed protrusions 74 are preferably perforated so that the secondary function can be disposed therefrom.

### MATERIAL WEB

As used herein, "material web" or "film" refers to any thin, permeable or impermeable substrate used to wrap perishable products. The web may comprise any material, including, but not limited to, paper, polymeric or plastic films, cloths or fabrics, wovens, nonwovens, laminates, metal foils such as aluminum foil, coated papers, such as wax paper or grease-proof paper, and combinations thereof. The properties of a selected material web can include, though are not restricted to, combinations or degrees of being: porous, non-porous, microporous, gas or liquid permeable, non-permeable, hydrophilic, hydrophobic, hygroscopic, oleophilic, oleophobic, high critical surface tension, low critical surface tension, surface pre-textured, elastically yieldable, plastically yieldable, electrically conductive, and electrically non-conductive.

Suitable polymeric films include, but are not limited to, polyethylene, ethylene copolymers such as ethylene-vinyl acetate (EVA), polypropylene, polyester (PET), polyvinyl chloride (PVC), polyvinylidene chloride and copolymers (PVDC), latex structures, polystyrene, nylon, oto. Polyolefins are generally preferred due to their lower cost and ease of forming. Preferred material gauges are about 0.0001 inches (0.0025 mm) to about 0,010 inches (0.25 mm). More preferred gauges are from about 0.0002 inches (0.005 mm) to about 0.002 inches (0.051 mm). Even more preferred gauges are from about 0.0003 inches (0.0076 mm) to about 0.001 inches (0.025 mm). The preferred material is 0.0007 inch (0.0178 mm) nominal thickness high density polyethylene (HDPE).

### ADHESIVE

As used herein, "adhesive" or "adhesive materials" include all materials typically considered for use to adhere one material to a target surface. Adhesive materials include, but are not limited to, glues, solvent-based adhesives, emulsions, and hot-melt pressure sensitive adhesives. An adhesive may be applied to a material web by any conventional application method known in the industry. This includes roller application, spray, coating, printing, transfer, extrusion, brush, pads, or combinations thereof. An adhesive can be applied to a continuous material web or to an individual sheet of material web. The multifunctional food wrap of the present invention includes embodiments where the adhesive is applied in a continuous layer over the surface of the material web, or applied in discrete regions, either large (e.g., by printing) or small (e.g., by spraying). The adhesive material is applied to the material web at a level of from about 0.1 grams per square meter (gsm) to about 50 gsm, preferably from about 0.5 gsm to about 20 gsm, more preferably from about 1 to about 10 gsm, and even more preferably from about 1 gsm to about 5 gsm.

Adhesive materials appropriate for use in the present invention have been disclosed in U.S. Patents 5,662,758; 5,871,607; 5,965,235; 6,194,062; 6,299,966; U.S. Patent Application 2002/0098348A1 and U.S. Patent Application Serial No. 09/758753.

Ways to handle adhesive materials on material webs are described in the following U.S. publications: (1) the formation of protrusions in the thin material web that protects an adhesive located between the protrusions (described in U.S. Pat. Nos. 5,871,607; 5,965,235; 6,194,062; and 6,193,918); (2) the formation of protrusions that are used to minimize the contact area of a film that has been covered with an adhesive (described in U.S.Pat. No. 6,299,966 B1); (3) the creation of an attenuating film on the surface of an adhesive (described in U.S. Pat. No. 5,948,493); and (4) the use of non-deformable standoffs along with an adhesive (described in U.S. Pat. No. 5,344,693 and U.S. Pub. No. 2002/0098348A1).

### SECONDARY FUNCTION

The present invention also comprises one or more secondary functions. The secondary functions may include chemical or physical means to deliver the secondary function. Chemical means can include, but are not limited to, antimicrobial agents, preservatives, atmosphere modifiers, odor elimination agents, product spoilage indicators, freezer burn inhibitors, temperature indicators, flavor enhancers, drying agents, water absorbers, microwave cooking enhancers, and combinations thereof. Physical means can include include, but are not limited to, atmosphere modification, product insulation, and combinations thereof. The secondary function can be disposed integrally, coextensively, or intimately with the adhesive, integrally, coextensively, or intimately with the material web, and/or integrally, coextensively, intimately, within a protrusion that is integral with the material web, integrally, coextensively, and/or intimately from a capping substrate through perforations in a web substrate, or combinations thereof.

### Chemical Means to Provide Antimicrobial Protection

In addition to providing a robust seal around a food item itself or a food item contained in a food storage vessel, the food wrap of the current invention can include chemical means selected to enhance the preservation of food items. For example, it may be desirable to include one or more antimicrobial agents in the film component and/or in the adhesive component to prolong food stability. This can be done by incorporating one or more antimicrobial agents into the packaging materials used to protect the product.

Migrating and/or non-migrating antimicrobial agents may be incorporated into the film or adhesive components of the current invention. Selection of the appropriate antimicrobial agent for an application could depend on the organisms likely to be present in a food product. Many anti-microbial agents are also potentially appropriate for the food wraps of the current invention. These include: organic acids such as proprionic, benzoic, sorbic, etc., their anhydrides, and salts; bacteriocins (proteins derived from microorganisms) such as nisin; spice extracts such as thymol and p-cymene; thiosulfinates such as allicin; enzymes such as peroxidases, and lysozymes; proteins such as conalbumin; isothiocyanates such as allylisothiocyantes; antibiotics such as imazalil; fungicides such as benomyl; chelating agents such as ethylenediaminetetra-acetic acid (EDTA); metals such as silver; silver-modified inorganic particles such as silver-modified zeolites exemplified by compounds such as Apicider-A (Sangi, Japan) and Zeomic® (Shinnanen New Ceramics Company, Japan); silver-modified metal oxide or barium sulfate particles such as the MicroFree™ powders from DuPont which include Z-200 (silver on a zinc oxide core), T-558 (silver, copper oxide, and zinc silicate on a titanium dioxide core), and B-558 (silver, copper oxide, and zinc silicate on a barium sulfate core); silver-modified polymers; silver-modified carbon particles; chlorinated compounds such as Triclosan (5-chloro-2,4-dichlorophenoxy) phenol, commercially sold as Microban®; chlorine dioxide-generating compounds such as Microsphere®, a product of Bernarrd Technologies; phenolic compounds such as ethyl. propyl and heptyl parabens; inherently antimicrobial polymers such as chitosan and its derivatives such as chitosan laurate and N-carboxymethyl chitosan, and combinations thereof.

In the food wraps of the current invention, both the film component and adhesive component may contact the food. For maximum effect, antimicrobial agents can be incorporated into both components. The same antimicrobial agent or agents can be incorporated into both components of the food wrap. In such situations, the concentration of antimicrobial agent or agents in the two components can be the same or they can be different.

In other cases, it is desirable to incorporate different antimicrobial agents or mixtures of antimicrobial agents into the film and adhesive components of the food wraps. This may be particularly desirable if two or more antimicrobial agents are incompatible with one another when incorporated into a single film layer or a single adhesive composition.

Such separation may also be useful in delivering dual or multiple efficacy against molds, yeasts, and bacteria. Further benefit may be realized by incorporating different categories or subcategories of antimicrobial agents into the two components of the food wrap. For example, a migrating agent can be incorporated into one component and a non-migrating agent into the other component or a volatile agent can be incorporated into one component and a non-volatile agent into the other component.

### Chemical Means to Provide Food Preservation

Nonlimiting examples of food preservatives that could be used in the film include: sulfites, butylated organics, nitrogen based, tocopherols, organic acids, inorganic salts, parabens and sorbates. Sulfites include sulfur dioxide (gas), sodium bisulfite, sodium sulfite, sodium metabisulfite and potassium metabisulfite. Sulfites are commonly used as an antibrowning agent in foods. Examples of butylated compounds include butylated hydroxyanisole (BHA) and butylated hydroxy toluene (BHT), common food additives. Nitrates and nitrites include sodium nitrite, sodium nitrate, potassium nitrite and potassium nitrate. Tocopherols include tocopheryl acetate (Vitamin E). Preferably, Vitamin E is used due to its ability to bloom to the surface of a film, is an effective antioxidant for the film and can provide additional nutritional benefits. Organic acids include ascorbic acid (Vitamin C) or propionic acid. Inorganic salts can include sodium benzoate, sodium chloride and calcium propionate.

Referring again to FIG. 2, a preferred film 10 uses an embossed, 0.7 mil (0.013 mm) thick HDPE film 12 containing 2500 ppm of α-tocopherol (vitamin E). The film 12 is embossed to produce protrusions 14 and valleys 16. Adhesive 14 is preferably disposed at about 2 gsm in valleys 16.

### Chemical and Physical Means to Provide Atmosphere Modification

The film of the current invention is capable of delivering a substantially air-tight seal to a container, thereby permitting the use of materials within the film that will result in a modified atmosphere package (MAP). Without an airtight seal, modified atmosphere technology may not be beneficial. The control of four materials is described: oxygen, carbon dioxide, moisture, and ethylene using both chemical and mechanical means. However this approach could be applicable to any change in the atmosphere as a result of using a food wrap film. The various compounds and methods described can also be used in combination to deliver additional benefits. Numerous means, both chemical and physical are capable of delivering MAP. The descriptions given are exemplary in nature.

### A. Absorbers/Emitters

### 1. Chemical Means to Remove Oxygen

It is desirable for a film with an airtight seal to be able to reduce the amount of oxygen in the package. Examples of oxidation include the browning of fresh fruit and a decrease in the amount of vitamin C in fruits and vegetable-based products. Chemical degradation can also occur via the oxidation of oil and fats, which generates unwanted odors and flavors.

### Oxygen absorbers can be classified into three categories:

### a. Inorganics:

Inorganic oxygen absorbers are typically based on metals such as iron, potassium or sodium or non-metals such as sulfur plus additional catalysts. Unlike organic absorbers, inorganic absorbers have lower propensity to generate off-odors and have a very high oxygen absorbing capacity. Metal-based systems are activated by water from the product or the atmosphere and are often used in combination with electrolytes such as sodium chloride. Commercial iron-based chemical means that could be directly incorporated into the film structure are made by Mitsubishi Gas Chemical (Ageless®), Toyo Seikan (Oxyguard®) and Ciba Specialty Chemicals (Shelfplus™).

### b. Low molecular weight organics:

Oxygen absorbers, including food preservation additives such as sulfites, ascorbic acid (Vitamin C), butylated hydroxy toluene (BHT), and vitamin E, can be incorporated into a film using techniques known in the art. Vitamin E can be used in PE film as an antioxidant. Furthermore, they can migrate to the surface and come into contact with the food and provide a preservative effect. Additional oxygen absorbing organic compounds include isoascorbic acid, squalene, castor oil, cathecol, quinone, yeast, glycols, enzymes such as glucose oxidase/catalase, and various unsaturated fatty acids and hydrocarbons. Since low molecular weight organics can often form undesirable byproducts, they are often used in conjunction with zeolites and other absorbents.

### c. High molecular weight organics:

Exemplary oxygen absorbing polymers include: UV activated multi-layer films (i.e., Cryovac OS1000®), polybutadiene derivatives, a photosensitizing dye and a singlet-oxygen acceptor (Zero₂), oxygen sensitive polymers with transition metal catalysts (i.e., Continental PET MXD6/Co), a modified PET-diene system for PET (i.e., BP Amooco Amosorb®), and combinations thereof, can be used by themselves or blended with other resins and extruded as either a monolayer or as part of a multilayer film. The activation step for some of these polymers requires UV energy which could be done prior to producing the roll of food wrap film. The film could be prevented from premature activation by using a barrier overwrap such as a foil-based structure.

### 2. Chemical Means to Remove Ethylene

The most common active chemical means for ethylene (a byproduct from the aging of fruits and vegetables) removal is potassium permanganate. In this invention, the active component, preferably potassium permanganate, is incorporated into the food wrap in a non-food contact layer to help preserve produce. The active component can be compounded into a base resin using equipment such as a twin screw compounder. The concentrate can be incorporated into a monolayer or multilayer film to remove ethylene and extend the shelf life of the produce. The active component could also be incorporated in the glue or printed on using an ink. The film could be used to extend the life of the produce that is wrapped in the film or could be placed inside the refrigerator on a wall.

Ethylene absorbers are electron-deficient, nitrogen-containing trienes. Materials of this type have been incorporated in ethylene-permeable packaging such as polyethylene, polypropylene or polystyrene. Commercial ethylene absorbing films include Profresh® (E-I-A Warenhandels GmbH), which is mineral-based, and Everfresh®, which is from natural Oya-Stone in Japan.

### 3. Chemical Means to Control Carbon Dioxide

Depending on the food, it may be desirable to remove or provide carbon dioxide. Calcium hydroxide can be used to eliminate carbon dioxide. Sodium bicarbonate in the presence of acid can generate carbon dioxide. These components could be directly incorporated into the film using techniques previously described.

### 4. Chemical Means of Removing Moisture

Many materials are capable of absorbing water including calcium sulfate, sodium chloride, potassium chloride, clays (e.g., Sud-Chemie Performance Packaging), polyvinyl alcohol (e.g., Grace Chemical, Davison), silica gel (e.g., Capitol Specialty Plastics), or molecular sieves. These are typically used in sachet form. These materials can be incorporated into the film of the current invention to create MAP using techniques described previously.

In addition, an adsorbent structure such as paper (cellulose) or non-woven can be used on the interior portion of the film to absorb liquid. The adsorbent would adhere to the adhesive in the food wrap but still permit sealing. Alternatively, the nonwoven could be adhered to the film and be embossed and coated with adhesive.

### B. Physical Means of Achieving Film Breathability

### 1. Membrane Technology

The permeation of the film can also be controlled to result in MAP based on temperature, which is useful for fresh produce. Foods respire at different rates and by controlling the rate of permeation, the shelf life of produce can be extended. One commercial example is Landec's Intellipac™ which varies the permeability based on the temperature. This resin is preferably made from side chain crystalline (SCC) polymers, which exhibit different permeabilities above their melting point. They are acrylic polymers with side chains that are capable of crystallizing independently from the main chain.

In order to minimize cost, the material is often used as a membrane or as a coating on microporous films. It is possible to create microporous films during the embossing/adhesive process. In the current invention, the film can then be coated with the selective permeable resin. If a membrane is used, a piece of film could be placed over a hole that has been die-cut into the food wrap and applied via pressure to the adhesive containing side of the food wrap.

### 2. Microporous Films

Another method to modify the atmosphere besides incorporation of adsorbing or emitting materials into the film structure is to tailor the permeability of the film by incorporating small holes in the film. These holes can be of various geometries and sizes. One preferred method is to design the embossing rolls such that small perforations are placed in the film at the time of manufacture. Alternatively film could be used in the emboss/adhesion application process that has been apertured using techniques known in the art including hot needle aperturing, spark aperturing or the incorporation of inorganics followed by orientation. When a film containing finely divided inorganics is stretched, small perforations are formed. These perforations can allow more rapid diffusion of gases such as ethylene and carbon dioxide.

A preferred embodiment of a MAP adhesive food wrap consists of an HDPE film having a thickness of 0.7 mil (0.018 mm) and coated with about 2 gsm of pressure sensitive adhesive. The film contains microperforations that are formed during the embossing process by controlling the engagement of the embossing rolls. This is particularly advantageous for reducing the moisture in a container.

### Chemical Means to Provide Odor Elimination

Examples of chemical means that can be used to eliminate odors include sodium bicarbonate (baking soda), potassium permanganate, cyclodextrin, zeolites, molecular sieves, activated carbon, zinc oxide, chitosan (surfactant treated) or silica gel. Polyalkylene imines, specifically polyethylene imine can be used to remove aldehydes that can be responsible for odors. These chemical means of eliminating odors include two primary categories: chemically reactive and adsorbents. Chemically reactive materials are generally basic in nature to neutralize the more acidic target gases. An example of a chemically reactive odor remover is zinc oxide. An example of an adsorbent odor remover is zeolites, which are minerals that are able to adsorb odors based on their physical structure. The specific choice of additive will depend on the odor to be eliminated, but activated carbon and zeolites are generally preferred.

The odor absorbing materials can be incorporated into film structures using techniques known in the art, including compounding the additive into a polymer resin such as polyethylene to form a concentrate. The concentrate is blended with additional resin and extruded into a film. An example of a commercial concentrate is Conpol™ 20LO from DuPont that contains molecular sieves. Abscent® molecular sieves from UOP (Des Plaines, IL) have also been incorporated into films for packaging applications. Cyclodextrin has also been incorporated into film structures to reduce odors. Using a food wrap with an airtight seal could reduce odors during food storage.

Referring again to FIG. 3, a film 32 can be used to either eliminate odors from within a food container 36 or from the environment 34. The film 32 could be used solely for removing odors by attaching it to the inside surface of the refrigerator requiring much less space than an odor removing device. For use as a food wrap, the layer containing the active component should be as close to the odor containing environment as possible. FIG. 3 shows a film structure 32, whereby layer 31 is a barrier material, layers 33 and 35 are tie-layers and layers 37 and 39 are polyolefins. For example, if odor elimination from the refrigerator is desired, incorporating the secondary function odor absorber in layer 31 would be preferred. For odor elimination from the food container 36, incorporating a secondary function into layer 39 would be preferred. Likewise, odor elimination from the environment 34, incorporating a secondary function into layer 39 would be preferred. Alternatively, the active component could be applied as a solution to the film prior to application of the adhesive or to layer 37 if odor removal from an external source is desired. Furthermore, the secondary function could be incorporated into tie layers 33, 35.

One method for improving the effectiveness of the active component is called Active-Pak and consists of incorporating channeling agents such as polyethylene glycol or glycerin into the layer that contains the active component. The odor is able to better reach the adsorbing component as a result of blending in the agent.

Besides reacting with or consuming odors, a film could also be used that minimizes the amount of odor that permeates through the film by using barrier resins. Examples of polymeric barrier materials that are useful for containing flavors and aromas are shown in Table 1. Materials such as a polymerized polyterpene, specifically polymerized d-limonene, can be blended into non-aroma barrier resins such as polypropylene to improve the flavor and aroma barrier. These resins are typically used as part of a multilayer film structure produced by coextrusion using either cast or blown film. They could also be incorporated in a film that is laminated to another film. They require an airtight seal in order to prevent odors from leaking out from the container.

**Table 1. Resins that can be used to reduce odor permeation through film.**

| **Resin** | **Tradename** | **Producer** |
|---|---|---|
| Ethylene vinyl alcohol | Soarnol® Eval® | Nippon Gohsei Kuraray |
| Polyamides (nylon) | Capron® | Honeywell |
| Acrylonitrile copolymer | Barex® | BP |
| Nylon MXD6 | MXD6 | Mitsubishi |
| Polyvinylidene copolymer (PVdC) | Saran® | Dow |

A preferred embodiment of an odor eliminating adhesive food wrap comprises a 1 mil (0.025 mm) multilayer film containing EVOH that is coated with 3 gsm pressure sensitive adhesive. The embossed substrate is a coextruded film. The structure of the film is 0.3 mil (0.008 mm) HDPE/0.1 mil (0.003 mm) Plexar® PX360/0.2 mil (0.005 mm) 32 mol% EVOH/0.1 mil (0.003 mm) Plexar® PX360/0.3 mil (0.007 mm) HDPE.

### Chemical Means to Provide Product Spoilage Indication

A spoilage indicator could be included in the polymeric film by incorporating a material that would undergo a change that could be used as a signal to the consumer. In addition to a color changing species, an indication of time/temperature could also be obtained by the release of a gas over time which would cause expansion of the package.

Color is the preferred mechanism for indicating food spoilage. Detector antibodies can be incorporated into an agarose gel and printed on the film at high speeds in a pattern or as a coating prior to embossing the film and glue application. The pattern could be such as to form a visual symbol of an "X" or other text such as "spoiled." A protective, thin gel coat is used to prevent removal of the antibody and to provide a trap for the pathogen. This would be done preferably prior to the adhesive application in order to maximize adhesion of the adhesive.

For moist foods, moisture permeates through the film. The rate is controlled by the type of film, thickness and temperature. By incorporating a material that changes color with increasing moisture such as cobalt chloride (changes from blue to pink), an indication of the amount of time exposed to food can be detected. This would most easily be incorporated by using a polymer concentrate containing the powder, blending it with additional resin and extruding it in an inner layer of a multilayer film structure.

In addition to moisture, freshness indicators can detect metabolites such as carbon dioxide, sulfur dioxide, ammonia, amines, hydrogen sulfide, organic acids, ethanol, toxins or enzymes. Indicators include color change of a dye, chemical reactions involving the formation of colored compounds, or liquid crystal. An example of a liquid crystal for this application is cholestanyl chloride.

A preferred embodiment of a spoilage indicator adhesive food wrap comprises a 0.7 mil (0.013 mm) HDPE film with about 2 gsm pressure sensitive adhesive. The protrusions are coated with detector antibodies that have been printed onto the surface after embossing/adhesive application.

### Means to Provide Freezer Burn Inhibition

The film of the current invention results in a superior food wrap that prevents freezer burn by creating an air-tight seal, minimizing loss of moisture from the package and allowing an easy way to remove air prior to sealing. The film is very easy to use since there is no cling to itself prior to activation. By pressing on the film, air is easily removed. Further improvements can be made by modifying the film and combining it with additional materials.

In order to improve the moisture barrier properties of the film, a thicker polyethylene (PE) film (preferably less than 3 mils) can be used since the barrier is directly proportional to the thickness of the film. Alternatively, a film with an improved moisture barrier can be used. Examples of polymers with an improved moisture barrier to PE include polyvinylidene chloride copolymers (PVdC), liquid crystalline polymers (LCP) and cyclic olefin copolymers (COC). These polymers can be used as monolayer or part of a multilayer film using techniques known in the art such as coextrusion. In addition, non-polymeric films could be used in combination with polymeric materials including wax paper or foil by combining the substrates using techniques known in the art.

The embossed film of the current invention could also be formed into a storage bag either by itself or in combination with a second film that is not embossed, whereby the film of the current invention would be on the inside of the bag with the adhesive side being towards the inside of the bag. A preferred mode would be to combine the embossed film with 2 mil linear low-density polyethylene (LLDPE) film and form into a bag using known techniques. The bag could also contain additional sealing features such as zippers or sliders. This is an improvement over current multilayer freezer bags because there is very little tack until the consumer presses the two films together thereby creating an air-tight seal. If sealed properly, this also limits the amount of air trapped in the package due to the excellent seal that is formed. The second non-embossed film is typically made of polyethylene including, but not limited to, high-density polyethylene (HDPE), LLDPE, or low-density polyethylene (LDPE). An example of this process is lamination, which can be done using techniques known in the art including the use of solvent and water-based adhesives or extrusion lamination which consists of extruding a molten polymer (e.g., LDPE) in between two films. In a preferred mode, the embossed film is laminated as part of the manufacturing process prior to removal from the female roll.

The film of the current invention does not have to be applied over the entire surface of the bag. For example, a piece of the embossed film could be applied to only one interior surface of the bag, as the adhesive would still cling to the opposing surface.

A preferred embodiment of an adhesive film to prevent freezer burn comprises a 0.7 mil embossed HDPE film that has been laminated to wax paper. The embossed film can be laminated to wax paper using a food grade adhesive. The outer surfaces of the resulting food wrap are the wax-coated side of the paper and the adhesive of the film.

### Chemical Means to Provide Temperature Indication

In some cases, it may be desirable to provide the food wrap user with a built-in temperature sensor or indicator to help determine if the food contained therein is at a desired temperature, for example at a temperature low enough for safe storage, frozen vs. defrosted, hot enough for serving, or too hot for consumption or handling thereby presenting a potential safety problem. Such temperature sensing or indicating properties can be imparted to the food wrap via the addition of thermochromic colorants to one or more of the components comprising the food wrap structure, those components being the adhesive, the polymeric film, or a printed layer on the side of the film opposed to the adhesive layer.

Thermochromic colorants (i.e., liquid crystal, polymeric, and leucodye types) can be added to inks, coatings, paints, injection or blow-molded plastics, extruded plastic shapes, sheets, or films, or adhesives. For direct incorporation into plastics which are heat processed, the colorants must be stable to both the heat and shearing in extruders, molders, and other processing equipment. Typical thermochromic pigments for plastics are stable to about 250 °C. Also, since the thermochromic molecules must be able to "twist" to generate the color changing effect, lower density polymers within the density range from about 0.86 grams/cc to about 1.3 grams/cc are generally preferred. Such polymers include polyolefins like polyethylene, polyethylene copolymers, polyethylene terpolymers, polypropylene, polypropylene copolymers, and polypropylene terpolymers. Also suitable are polyvinyl chloride and its copolymers and terpolymers, polystyrene and its copolymers and terpolymers, and other materials known to those skilled in the art. The level of thermochromic colorant added to an ink, paint, coating, or plastic typically ranges from about 0.01 weight % to about 2.0 weight % preferably from about 0.1% to about 1.0 weight %.

Thermochromic inks may be applied by any printing technique including offset, flexographic, gravure, and screen-printing methods. They may be water or solvent based which are solidified by removal of the water or solvent, for example by thermal drying, or 100% solids formulations solidified by exposure to ultraviolet or other form of radiation. Thermochromic inks and coatings may be applied to paper, textile (woven or non-woven), wood, glass, metal, ceramic, polymeric, or composite substrates.

### Food Wrap Embodiments:

A. Food wrap with thermochromic adhesive. A thermochromic colorant is compounded into the pressure sensitive hot melt adhesive in the melt tank and applied to the film during the embossing process. A polymeric thermochromic colorant is preferred, due to its non-migrating behavior and good stability at elevated temperature. The colorant is added to the adhesive at a level from about 0.01 weight % to about 2.0 weight % preferably from about 0.1% to about 1.0 weight %.
B. Food wrap with thermochromic monolayer film. A thermochromic colorant is melt compounded with a polymeric resin, preferably polyolefin-based, in a melt compounding apparatus such as a single screw or twin screw extruder and formed into a thin film preferably less than about 250 microns thick, more preferably less than about 100 microns thick and most preferably less than about 25 microns thick. A polymeric thermochromic colorant is preferred, due to its non-migrating behavior and good stability at elevated temperature. The colorant is added to the polymeric resin used to form the film at a level from about 0.01 weight % to about 2.0 weight % preferably from about 0.1% to about 1.0 weight %.
C. Food wrap comprising a 3 layer film containing a thermochromic colorant: A thermochromic colorant is melt compounded with a polymeric resin, preferably polyolefin-based, in a melt compounding apparatus such as a single screw or twin screw extruder and coextruded as the "B" layer in a thin multilayer A-B-C film wherein the total film thickness is preferably less than about 250 microns thick, more preferably less than about 100 microns thick and most preferably less than about 25 microns thick. Layers "A" and "C" may be formed from the same resin as the "B" layer or from different resins, but without the thermochromic colorant. Alternatively, layers "A" and "C" may be formed from one or two different resins from "B." "A" and "C" can be formed from the same material creating an A-B-A structure or be formed from two different materials creating an A-B-C structure. Since the film and colorant will not be in direct contact with food, a thermochromic colorant approved for either direct or indirect food contact is used. A polymeric thermochromic colorant is preferred, due to its non-migrating behavior and good stability at elevated temperature, but suitable leucodye-based or liquid crystal-based colorants may also be used. The colorant is added to the polymeric resin used to form the "B" layer at a level from about 0.01 weight % to about 2.0 weight % preferably from about 0.1% to about 1.0 weight %.
   Multilayer films having more than 3 layers can also be formed using coextrusion techniques to bury or sandwich the layer containing the thermochromic colorant between other polymeric layers such that the colorant-containing layer does not reside at either surface of the multilayer film. The additional layers may comprise one or more barrier layers to further restrict or prevent migration of the thermochromic colorant, or to impart other desirable properties, such as increased barrier to oxygen or moisture vapor permeation, to the food wrap.
D. Food wrap with printed thermochromic colorant layer. The film to be embossed and combined with adhesive into a food wrap is pre-printed with an ink formulation containing a thermochromic colorant prior to being processed into a food wrap product. The thermochromic ink may be applied by any printing technique including offset, flexographic, gravure, or screen-printing methods. The ink may be either a water or solvent-based liquid formulation that is then solidified by removal of the water or solvent, for example by exposure to elevated temperature. The ink is applied to the film surface opposite the one to which the adhesive is affixed during the embossing process. A polymeric thermochromic colorant is preferred, due to its non-migrating behavior and good stability at elevated temperature, but suitable leucodye-based or liquid crystal-based colorants may also be used. The colorant is added to the ink formulation such that its concentration in the dried or solidified ink is about 0.01 weight % to about 2.0 weight % preferably from about 0.1% to about 1.0 weight %. To ensure the colorant cannot come into direct contact with food, an additional layer of food contact approved lacquer or varnish is applied over the printed ink layer. The lacquer or varnish is selected such that it is compatible with the embossing and adhesive application step or steps.

The printed layer may be deposited in either a continuous or discontinuous pattern on the film. It may also be printed in the form of words that either appear or disappear depending on the use of the product and the temperature transitions it is exposed to. Different types of inks can be applied to different areas of the film surface to provide temperature indication at just one temperature transition or at different temperature transitions on the same film, for example, from freezing temperatures to ambient or from ambient to elevated temperatures, or both.

### Chemical Means of Providing Nutritional and Dietary Benefits.

For certain food preparation or storage operations, it is desirable to provide nutritional benefits via a food wrap product. Nutritional benefits are delivered through the release of dietary supplements including vitamins, vitamers, minerals, dietary fibers, proteins, amino acids, and mixtures thereof from the food wrap, such that the supplements can migrate to the food during either food storage or food preparation or both food storage or food preparation.

Dietary supplements can be contained within the structure of the food wrap, for example, compounded into the film or adhesive components or between the adhesive and film components. Alternatively, these dietary supplements can be applied to one or more of the surfaces of the food wrap, for example, applied onto the surface of the pressure sensitive adhesive, partially occluding said surface, but such that the adhesive is not completely prevented from adhering to other surfaces or the food wrap itself. The additives may be used in their natural form or microencapsulated to provide, for example, increased storage stability. They may be encapsulated individually or in mixtures with other dietary supplements. Suitable encapsulating materials include gelatins, starches, polypeptides, and other edible polymers, both natural and synthetic.

In one preferred embodiment, the food wrap is a continuous sheet supplied in a roll. The food item is wrapped with the food wrap such that the surface bearing the dietary supplement or supplements contacts the food surface. The dimples in the film are crushed by the user to bring the dietary supplements into intimate contact with the food surface. Moisture from the food or mechanical action releases the dietary supplements from the film or adhesive surface to the food surface. After a predetermined storage time, the wrap is removed and the food is cooked and served.

In a second preferred embodiment, the plastic sheet is pre-formed into a rectangular bag closed on 3 sides with an opening on the fourth side. A food item is placed in the bag, which is then closed by pressing the two inner film surfaces of the opposing sides together. The dimples in the film are crushed by the user to bring the dietary supplements into intimate contact with the food surface. Moisture from the food or mechanical action releases the dietary supplements from the film or adhesive surface to the food surface. After a predetermined storage time, the bag is removed and the food is cooked and served.

### Chemical Means to Enhance Flavor

For certain food preparation or storage operations, it is desirable to provide flavor, flavor-enhancing, aroma-enhancing, seasoning, or additional cooking benefits via a food wrap product. For example the preparation of meat or seafood products can often benefit from pre-application of tenderizers, salt, pepper spices, seasonings, marinades, and other additive materials. Other products may benefit from the addition of natural or artificial sweeteners. Such additive materials can be contained within the structure of the food wrap, for example, compounded into the film or adhesive components or between the adhesive and film components. Alternatively, these additive materials can be applied to one or more of the surfaces of the food wrap, for example, applied onto the surface of the pressure sensitive adhesive, partially occluding said surface, but such that the adhesive is not completely prevented from adhering to other surfaces or the food wrap itself.

### Chemical Means of Absorbing Moisture

Since the pressure sensitive adhesive of the current invention generally comprises hydrocarbon-based elastomers, oils, and tackifying agents that are hydrophobic, adhesion of the food wrap to wet or moist container surfaces may not be sufficient to obtain a tight, reliable seal. It is therefore desirable to incorporate one or more means of moisture management into or onto the components of the food wrap product, those components being the polymeric film or the pressure sensitive adhesive.

Drying agents can be incorporated into the polymeric film, the adhesive component, or both the polymeric film and the adhesive component of the current invention. Mixtures of various types of drying agents can also be incorporated. Preferred are those compounds which are solid or molten when melt compounded into the polymer or adhesive and remain solid or solidify on cooling to room temperature to create a separate phase of drying agent material which is not readily extractable from the polymeric film or adhesive. Especially preferred are those drying agent compounds that are generally recognized as safe for direct food contact.

Finely powdered anhydrous calcium chloride (CaCl₂), finely powdered calcium chloride hexahydrate (CaCl₂ 6H₂O), finely powdered hydoxypropyl cellulose (HPC), finely powdered AGM comprising lightly crosslinked sodium polyacrylate, or combinations thereof can be compounded and dispersed into the hot melt adhesive in the melt tank at a level between 1 and 50 weight %. The molten adhesive is applied to the surface of the female embossing roll via a 3-roll applicator system. During the film embossing step, the adhesive is transferred to the polymeric film.

Alternatively, finely powdered silica gel, present in about 50% by weight of the EVOH, can be precompounded in a twin-screw compounder with a molten ethylene-vinyl alcohol (EVOH) copolymer. The compound is extruded into strands that are cooled, solidified, and pelletized. The pelletized blend is then reduced to a fine powder by grinding. The ground EVOH-silica gel compound is then compounded and dispersed into the hot melt adhesive in the melt tank at a level between 20 and 50 weight %. The molten adhesive is applied to the surface of the female embossing roll via a 3-roll applicator system. During the film embossing step, the adhesive/EVOH/silica gel composition is transferred to the polymeric film. The presence of the hydrophilic EVOH in the adhesive blend facilitates the transport of water to the silica gel particles.

It is also possible to place or embed drying agents on the surface of the pressure sensitive adhesive in the form of finely dispersed particles rather than mixing them with the adhesive. Preferred drying agents are typically Type 4 compounds that will adsorb or absorb water quickly without forming a solution. Non-limiting examples include inorganic compounds such as activated alumina, silica gel, and molecular sieves based on aluminosilicate zeolites, and organic compounds such as lightly crosslinked water-soluble polymers and inherently water absorbing polymers such as block copolymers containing blocks of water soluble polymers such as polyamide-polyether oxide block copolymers, polyester-polyether block copolymers, polyamides, and similar materials known to those skilled in the art.

It is also possible to include an additive in the adhesive or surface particles on the adhesive that absorb water to form an adhesive composition. For example, water-soluble polymers used in bio-adhesives or denture fixative creams can be used in the current invention. Non-limiting examples of suitable polymers include the Gantrez MS series available from International Specialty Products (Wayne, New Jersey, USA). These polymers are mixed sodium/calcium salts of polymethyl vinyl ether-maleic anhydride copolymers.

One method for producing a food wrap would incorporate a water-adsorptive polymer such as sodium polyacrylate and a binder on a substrate and combine this with a water-impermeable backsheet such as polyethylene using techniques known in the art. The substrate serves to help retain the water absorber particularly after it is wet. The substrate could be a nonwoven made from thermoplastic polymers such as polypropylene. Examples of other water absorbers are materials made from cellulose fibers, carboxy methyl cellulose or crosslinked polysaccharides. A topsheet could be added which could be any liquid permeable material including nonwovens or perforated plastic film. This combined absorbent film could then be embossed/printed with adhesive to create an improved food wrap capable of absorbing excess liquid while maintaining an excellent seal. It would also be possible to laminate a previously embossed/adhesive printed film to the film with the water absorbing layer. Furthermore, the absorbing layer could be targeted at absorbing specific materials such as fat by using a lipophilic nonwoven such as polypropylene that absorbs oil but not water.

Alternatively, the absorbent material could be included in the hot melt adhesive or printed onto the non-adhesive containing surface of the food wrap in which case the internal absorbing layer would not be necessary.

In a preferred embodiment, an absorbent bag is made. This absorbent bag would consist of an outer water impermeable film, an inner water absorbing layer; and an inner water permeable layer. A strip of the film with the embossed/adhesive pattern is added at the top to function as the sealing mechanism.

### Chemical Means of Moisture Control

Moisture control can be critical for keeping foods fresh. For example, bread is very sensitive to the amount of moisture present. It is therefore desirable to have a film that is capable of keeping food fresh by controlling the amount of moisture present combined with the excellent sealing of the embossed/adhesive printed film.

Examples of polymers with low moisture transmission rates include high density polyethylene (HDPE), polypropylene (PP) and cyclic olefin copolymers (COC). Coatings of inorganics such as aluminum, silicon oxide or aluminum oxide can be used as well. Foil is an excellent moisture barrier. These materials could be combined with the film of the current invention to make a material with an airtight seal and very low moisture loss.

In addition to preventing moisture loss, it is also possible to add moisture to the package. One embodiment could use a multilayer film such that the outer layer is a good moisture barrier. The film towards the food would be microperforated. In between the two films would be a material that is capable of humidity control. An example of this humidity control additive would be a glucose solution. Other humidity control agents include any material capable of absorbing water including nonwovens, cellulosic based materials, silica gel and polyacrylates used as absorbent gelling material. The humidity control agent could also be placed in a film layer or in the adhesive. The humidity agent could be premoistened or moisture could be added by the consumer. For moisture to be added to the package, the humidity control agent would need to be saturated with moisture.

When bread is first made, it gives off moisture which can lead to condensation. A method for avoiding condensation is to use a microporous film such as that produced by Cryovac (Saddle Brook, NJ). A microporous film could be used in the embossing/adhesive process to create a film with excellent breathability and sealing characteristics. Alternatively, in a preferred embodiment, a microporous film can be made during the embossing/adhesive printing operation by controlling the engagement of the male and female roll. As a result, a film is produced which is capable of forming an excellent seal but would prevent moisture buildup in fresh bread.

Another method for reducing moisture in a package is to use absorbents that are either blended into a film layer or can be trapped between layers by heat-sealing the edges of two or more films. Examples of absorbents include salts of polyacrylates, zeolites, sodium chloride, calcium sulfate, polyvinyl alcohol, and potassium chloride.

A preferred embodiment of a moisture control adhesive wrap is a microporous HDPE film. The HDPE film has a thickness of 0.7 mil (0.013 mm) and is coated with 3 gsm of pressure sensitive adhesive. The film contains microperforations that are formed during the embossing process by controlling the engagement of the rolls. The perforations average 0.1 mm in length. This is particularly advantageous for controlling the moisture in a container.

### Physical Means of Enhancing Microwave Cooking

In a preferred embodiment, polypropylene (PP) with a melting point above 150°C is used that has been embossed/adhesive printed. The film can be monolayer or multilayer. In the case of multilayer films, the outer layers can have a lower melting point. Perforations can be added to the film before, during or after the embossing/adhesive printing process. In a preferred embodiment, the film is perforated during the process by controlling the engagement of the male and female rolls.

It would also be desirable for cooking some foods to release moisture from the film during the cooking process. This could be done by combining a perforated film with a non-perforated layer and including a water absorbing material such as Bounty® paper towels in the middle. Upon heating, moisture would be released into the container.

Antifog additives could also be used in the film to prevent fogging of the film during cooking. Examples of antifog additives include glycerol and sorbitan esters.

It can also desirable to have a film that would accelerate heating of the food and have the potential for browning food. This can be done using film that contains microwave susceptors. Susceptors involve a light deposition of a microwave active metal, such as aluminum, on a thermally stable substrate. The susceptor film results in a high temperature that can result in browning. A possible substrate is polyester (PET) with a melting point of more than 200°C. This film can be combined with various materials including paper and polymer films. This type of packaging is used for microwave popcorn bags such as that made by Phoenix Packaging (Maple Grove, MN). By combining a susceptor film, with the embossed/adhesive film, a film that accelerates cooking and maintains excellent adhesion to the container is achieved. Optionally, flavors and fragrances can be added to the film that are released during cooking.

A preferred embodiment of a microwavable adhesive food wrap is microperforated PP film having a thickness of 0.7 mil (0.018 mm) and coated with about 2 gsm of pressure sensitive adhesive. The film contains microperforations that are formed during the embossing process by controlling the engagement of the embossing rolls. This is particularly advantageous for reducing the moisture in a container.

### Physical Means of Insulating Products

In a preferred embodiment, a thin polystyrene foamed film is combined with the embossed food wrap to provide a food wrap with excellent insulative properties. The foamed film can be any polymeric film and includes but is not limited to polystyrene, polyethylene, polypropylene, polyurethane, nylon and polyester. This food wrap could be used to keep food either hot or cold longer than traditional food wraps. Another key advantage is that the airtight seal of the present invention reduces thermal loss. Besides small cell (<100 microns) foam, it would also be possible to use any structure that results in trapped air, for example nonwovens or cellulosic-based materials. These materials could be laminated to the embossed film to create a multilayer film using techniques known in the art, such that the embossed film is in direct contact with the food. In addition, the nonwoven or cellulose material could be extrusion coated with a resin or laminated and then run through the emboss/adhesive application step to create a food wrap with improved insulation.

A preferred embodiment of an adhesive food wrap, capable of providing insulation, is a multilayer film containing 4 mils (0.10 mm) of foamed polystyrene that is laminated to the non-adhesive side of the film of FIG. 2. The film is HDPE, 0.7 mil (0.018 mm) in thickness and coated with 3 gsm of pressure sensitive adhesive.

### Chemical Means of Heating

The wraps of the present invention may comprise a chemical secondary function of being able to heat the products contained in the wrap. Chemical heating is well known in the art and includes without limitation iron-promoted magnesium-water reactants and suppressed hydrogen magnesium reactant disclosed in U.S. Pat. No. 5,517,981; electrochemical oxidation of powdered metallic substances disclosed in U.S. Pat. No. 4,205,957; and electrochemical heating disclosed in U.S. Pat. No. 3,774,589.

### Chemical Means of Cooling

One embodiment of a self-cooling food wrap is fabricated by thermoforming or embossing a first polymeric film with 3-dimensional depressions or reservoirs, separated by land areas that prevent communication between said reservoirs. A portion of the reservoirs is charged with powdered electrolyte while the remaining reservoirs are charged with a fluid capable of dissolving said electrolyte, such as water. A second non-embossed polymeric film is placed over the first embossed sheet and heat sealed to it such that the perimeters of the first and second sheets are permanently joined together. Heat seals are also formed between the lands of the embossed film and the second polymeric film. A portion of the heat seals formed between the lands of the embossed film and the second polymeric film are permanent to keep the films from separating into a bag-like structure. The remainder of the heat seals formed between the embossed film and the second polymeric film are frangible and, though capable of preventing the fluid and electrolyte from reaching one another initially, are rupturable by the end user via crushing, twisting, shearing or other mechanical deformations of the food wrap. Once the frangible seals are ruptured, the fluid and electrolyte are capable of mixing with one another to initiate the endothermic dissolution process.

Electrolytes selected for the self-cooling food wraps of the current invention have a heat of solution between about 100 and about 15,000 calories/mole, preferably between about 500 and about 14,000 calories/mole, and even more preferably between about 1000 and about 12,000 calories/mole. Non-limiting examples of such electrolytes include, NaCl (928 cal/mole), KCL (4,115 cal/mole), NH₄NO₃ (6,140 cal/mole), KNO₃ (8,340 cal/mole), KMO₄ (10,400 cal/mole), and KClO₄ (12,200 cal/mole). Further examples can be found in the Handbook of Chemistry and Physics, 72nd Edition (1991-92) Section 5, p101 herein incorporated by reference.

### METHOD OF MAKING

The multifunctional food wraps of the present invention may be produced by any known process utilized for making adhesive wraps, including but not limited to those method described in commonly owned and assigned U.S. Patent Nos. 6,193,918 and 6,602,454.

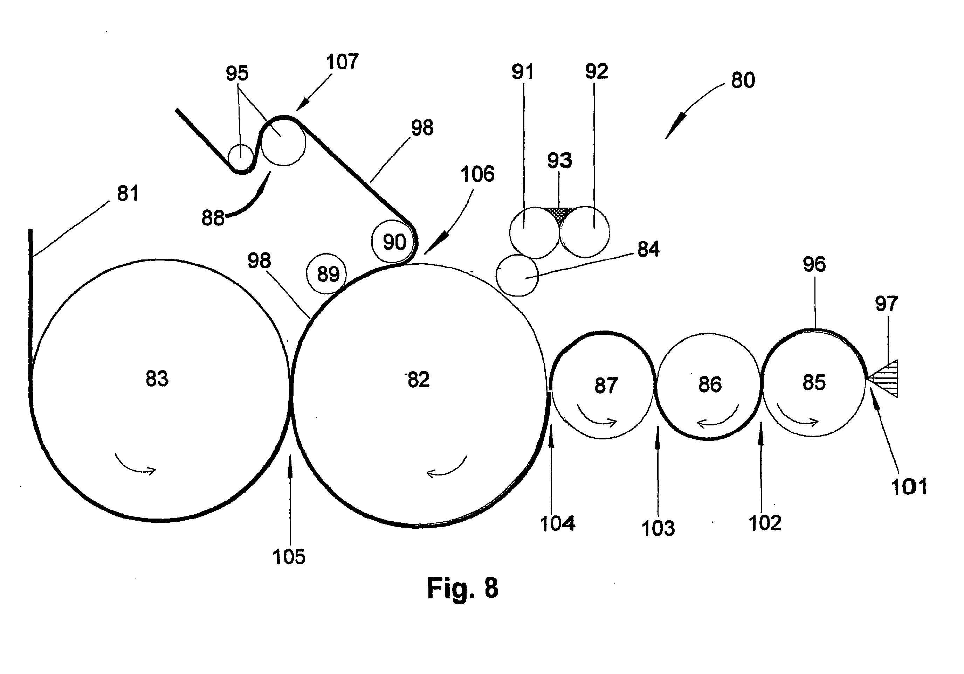

FIG. 8 illustrates, in schematic form, a preferred embodiment of the processes and apparatus 80 of the present invention where adhesive is the substance printed onto a simultaneously embossed material web 81. A secondary function can be provided within adhesive 96 or within or upon material web 81. The apparatus to run the process of the present invention may comprise two mated embossing rolls 82 and 83, and a liquid applicator roll 84 and multiple adhesive metering/application rolls 85-87. The apparatus may optionally comprise a chilled S-wrap 88, a pressure roll 89 or a strip-off roll 90. The embossing rolls 82 and 83 may optionally have a matched embossing pattern etched into them which interlocks to emboss a web of sheet material passed therebetween. The roll with pockets and raised lands is referred to as the female embossing roll 82, while the roll with raised nubs and recessed lands is referred to as the male embossing roll 83. The release agent liquid application/metering rolls 84, 91-92 deliver the release agent 93 to the transfer surface. The release agent liquid application/metering rolls 84, 91-92 are typically either metal, such as steel or chrome, or rubber coated steel. Similarly, the adhesive application/metering rolls 85-87 may also be metal or rubber coated steel.

The optional pressure roll 89 and strip off roll 90 may be rubber coated steel or other suitable material. The optional chilled S-wrap can comprise hollow steel rolls 95 with a release coating on their outside surfaces and coolant flowing through the rolls. The direction of roll rotation is shown in FIG. 8 with arrows.

As also shown in FIG. 8, an adhesive 96 (such as a hot melt pressure sensitive adhesive) may be extruded onto the surface of the first rotating roll 85 via a slot die 97. The slot die 97 may be supplied by a hot melt supply system (with a heated hopper and variable speed gear pump, not shown) through a heated hose. The surface speed of the first of the adhesive metering rolls 85 may be considerably slower than the nominal tangential line speed of the web of sheet material 81 to be embossed and adhesive-coated. The metering nips are shown as stations 101, 102, and 103. The remaining adhesive metering rolls 86-87 may rotate progressively faster so that the adhesive application nip, station 104, is surface speed matched to embossing roll 82. The adhesive 96 is transferred from the adhesive application roll 87 to the embossing roll 82 at station 104. The adhesive 96 travels with the embossing roll 83 surface to station 105, where it is combined with the polymer web 81 which is carried into station 105 via embossing roll 83.

At station 105, the polymer web 81 is embossed and printed with the adhesive 96 simultaneously to form an adhesive coated web 98. The web 98, still glued to the embossing roll 82, travels to station 106, where it is stripped off the embossing roll 83 via strip-off roll 90. The process may also include an optional pressure roll 89 which applies pressure to the glued portion of the adhesive coated web 98 between the embossment at station 105 and the strip off roll 90. The finished adhesive-coated web 98 then may travel to an optional chilled S-wrap 88 at station 107, where it is cooled to increase its strength.

In certain embodiments it may be desirable to emboss the film 81 at high embossing temperature to promote crisp, high-caliper embossments and allow the adhesively-coated film web 98 to release from the female embossing roll 83 with lower strip-off force. However, it may be desirable to keep the temperature of the embossing rolls 82 and 83 below the softening point of the film web 81 so that the final adhesively-coated web 98 will have sufficient tensile strength to be removed from the female embossing roll 83. A balance between release temperature and film softening temperature has been found to be one parameter in defining desirable operating conditions for operating at high speeds.

The optional strip-off roll 90 assists in removing the final adhesively-coated web 98 from the female embossing roll 83 without damaging the film. Since the adhesively-coated web 98 is glued to the surface of the female embossing roll 83, very high forces can be developed at the strip-off point. The strip off roll 90 may localize these high forces to a very short length of web, resulting in less distortion of the adhesively-coated web 98 and more control over the strip-off angle. Preventing distortion of the final product is helpful to provide consistent film properties and prevent the film from having regions which are prematurely activated to exhibit adhesive properties.

The amount or degree of engagement between the male 82 and female embossing rolls 83 can be controlled to help prevent damage to the rolls or to the film web 81. In certain, preferred embodiments the outside surfaces of the embossing rolls are ground to a 0.0005 inch (0.013 mm) TIR runout tolerance. The engagement may be controlled in the machine with precision wedge blocks. The engagement of the embossing rolls generally governs the final caliper of the film (i.e., the final height of the embossments).

All percentages, parts and ratios are by weight of the total composition, unless otherwise specified. All such weights as they pertain to listed ingredients are based on the specific ingredient level and, therefore, do not include solvents, carriers, by-products, filler or other minor ingredients that may be included in commercially available materials, unless otherwise specified.

## Claims

1. A multifunctional food wrap (10, 20, 40, 50, 60, 70) comprising:
(a) a material web (12, 22, 42, 52, 62, 72) having a first active side and a second side, said material web comprising a plurality of protrusions (14, 24, 44, 54, 64, 74), said protrusions being integral with said first active side and said second side, said protrusions having spaces (16, 26, 46, 56, 66, 76) therebetween;
(b) an adhesive (18, 28, 48, 58, 68, 78) disposed upon said first active side of said material web within said spaces between said protrusions but not upon said protrusions; and,
(c) wherein said adhesive comprises at least one secondary function selected from the group consisting of antimicrobial protection, food preservation, atmosphere modification, odor elimination, product spoilage indication, freezer burn inhibition, temperature indication, nutrition and dietary benefits, flavor enhancement, moisture absorption, moisture control, enhancing microwave cooking, heating, cooling, product insulation, and combinations thereof.

2. The multifunctional food wrap of Claim 1 wherein said material web is selected from the group consisting of paper, polymeric films, plastic films, cloths, fabrics, wovens, nonwovens, laminates, metal foils, coated papers, and combinations thereof.

3. The multifunctional food wrap of Claim 1 wherein said material web further comprises a second at least one secondary function disposed within said sheet of material, said second at least one secondary function being disposable beyond said protrusions in response to an application of an external force to said multifunctional food wrap.

4. The multifunctional food wrap of Claim 1 wherein said material web comprises at least one layer.

5. The multifunctional food wrap of Claim 1 wherein said plurality of protrusions comprise an amorphous pattern.

6. The multifunctional food wrap of Claim 1 wherein said adhesive and said at least one secondary function are disposable beyond said protrusions in response to an application of an external force to said multifunctional food wrap.

7. A multifunctional food wrap (10, 20, 40, 50, 60, 70) comprising:
(a) a material web (12, 22. 42, 52, 62, 72) comprising one or more layers, said material web comprising a first active side and a second side, said material web further comprising a plurality of protrusions (14, 24, 44, 54, 64, 74), said protrusions being integral with said first active side and said second side, said protrusions having spaces (16, 26, 46, 56, 66, 76) therebetween;
(b) an adhesive (18, 28, 48, 58, 68, 78) disposed upon said first active side of said material web within said spaces between said protrusions but not upon said protrusions; and,
(c) at least one secondary function disposed within said web material, wherein said secondary function is selected from the group consisting of antimicrobial protection, food preservation, atmosphere modification, odor elimination, product spoilage indication, freezer burn inhibition, temperature indication, nutrition and dietary benefits, flavor enhancement, moisture absorption, moisture control, enhancing microwave cooking, heating, cooling, product insulation, and combinations thereof.

8. The multifunctional food wrap of Claim 7 wherein said web material is a co-extruded film.

9. The multifunctional food wrap of Claim 8 wherein said co-extruded film comprises at least one tie layer, said tie layer comprising said at least one secondary function.

10. The multifunctional food wrap of Claim 7 further comprising a substantially hydrophobic back sheet attached to said second side of said multifunctional food wrap.

11. A multifunctional food wrap (10, 20, 40, 50, 60, 70) comprising:
(a) a material web (12, 22, 42, 52, 62, 72) comprising at least one layer, said material web having a first active side and a second side, said material web comprising a plurality of protrusions (14, 24, 44, 54, 64, 74) integral with said first active side and said second side, said protrusions having spaces (16, 26, 46, 56, 66, 76) therebetween;
(b) an adhesive (18, 28, 48, 58, 68, 78) disposed upon said first active side in said spaces between said protrusions but not upon said protrusions; and,
(c) at least one secondary function disposed in, and integral with, said protrusions, wherein said secondary function is selected from the group consisting of antimicrobial protection, food preservation, atmosphere modification, odor elimination, product spoilage indication, freezer burn inhibition, temperature indication, nutrition and dietary benefits, flavor enhancement, moisture absorption, moisture control, enhancing microwave cooking, heating, cooling, product insulation, and combinations thereof.

12. The multifunctional food wrap of Claim 11 wherein said adhesive comprises a second at least one secondary function.

13. The multifunctional food wrap of Claim 12 wherein said protrusions are rupturable, said at least one secondary function being disposable from said protrusions in response to an external force.

14. The multifunctional food wrap of Claim 13 wherein said protrusions further comprise a weak region, said at least one secondary function being releasable from said protrusion through said weak region in response to said external force.

## Patentansprüche

1. Multifunktionelle Lebensmittelhülle (10, 20, 40, 50, 60, 70), umfassend:
(a) eine Materialbahn (12, 22, 42, 52, 62, 72) mit einer ersten aktiven Seite und einer zweiten Seite, wobei die Materialbahn mehrere Vorsprünge (14, 24, 44, 54, 64, 74) umfasst, wobei die Vorsprünge mit der ersten aktiven Seite und der zweiten Seite einstückig ausgebildet sind, wobei die Vorsprünge Freiräume (16, 26, 46, 56, 66, 76) dazwischen haben;
(b) ein Haftmittel (18, 28, 48, 58, 68, 78), das auf der ersten aktiven Seite der Materialbahn innerhalb der Freiräume zwischen den Vorsprüngen, jedoch nicht auf den Vorsprüngen aufgebracht ist; und
(c) wobei das Haftmittel mindestens eine sekundäre Funktion umfasst, die ausgewählt ist aus der Gruppe, bestehend aus antimikrobiellem Schutz, Lebensmittelkonservierung, Atmosphärenmodifikation, Geruchsbeseitigung, Anzeige von Produktverschüttung, Gefrierbrandverhinderung, Temperaturanzeige, Nährwert- und diätischen Vorteilen, Geschmacksverstärkung, Feuchtigkeitsabsorption, Feuchtigkeitsbegrenzung, Verbesserung von Mikrowellengarung, Erwärmung, Abkühlung, Produktisolierung und Kombinationen davon.

2. Multifunktionelle Lebensmittelverpackung nach Anspruch 1, wobei die Materialbahn ausgewählt ist aus der Gruppe, bestehend aus Papier, Polymerfolien, Kunststofffolien, Tüchern, Stoffen, Geweben, Vliesstoffen, Laminaten, Metallfolien, beschichtetem Papier und Kombinationen davon.

3. Multifunktionelle Lebensmittelverpackung nach Anspruch 1, wobei die Materialbahn ferner mindestens eine zweite sekundäre Funktion, die innerhalb der Materiallage angeordnet ist, umfasst, wobei die mindestens eine zweite sekundäre Funktion infolge eines Anlegens einer externen Kraft an die multifunktionelle Lebensmittelverpackung über die Vorsprünge hinaus angeordnet werden kann.

4. Multifunktionelle Lebensmittelverpackung nach Anspruch 1, wobei die Materialbahn mindestens eine Schicht umfasst.

5. Multifunktionelle Lebensmittelverpackung nach Anspruch 1, wobei die mehreren Vorsprünge ein formloses Muster umfassen.

6. Multifunktionelle Lebensmittelverpackung nach Anspruch 1, wobei der Klebstoff und die mindestens eine sekundäre Funktion infolge eines Anlegens einer externen Kraft an die multifunktionelle Lebensmittelverpackung über die Vorsprünge hinaus angeordnet werden kann.

7. Multifunktionelle Lebensmittelverpackung (10, 20, 40, 50, 60, 70), umfassend:
(a) eine Materialbahn (12, 22, 42, 52, 62, 72), die eine oder mehrere Schichten umfasst, wobei die Materialbahn eine erste aktive Seite und eine zweite Seite umfasst, wobei die Materialbahn ferner mehrere Vorsprünge (14, 24, 44, 54, 64, 74) umfasst, wobei die Vorsprünge mit der ersten aktiven Seite und der zweiten Seite einstückig ausgebildet sind, wobei die Vorsprünge Freiräume (16, 26, 46, 56, 66, 76) dazwischen haben;
(b) ein Haftmittel (18, 28, 48, 58, 68, 78), das auf der ersten aktiven Seite der Materialbahn innerhalb der Freiräume zwischen den Vorsprüngen, jedoch nicht auf den Vorsprüngen aufgebracht ist; und
(c) mindestens eine sekundäre Funktion, die innerhalb des Bahnenmaterials angeordnet ist, wobei die sekundäre Funktion ausgewählt ist aus der Gruppe, bestehend aus antimikrobiellem Schutz, Lebensmittelkonservierung, Atmosphärenmodifikation, Geruchsbeseitigung, Anzeige von Produktverschüttung, Gefrierbrandverhinderung, Temperaturanzeige, Nährwert- und diätetischen Vorteilen, Geschmacksverstärkung, Feuchtigkeitsabsorption, Feuchtigkeitsbegrenzung, Verbesserung von Mikrowellengarung, Erwärmung, Abkühlung, Produktisolierung und Kombinationen davon.

8. Multifunktionelle Lebensmittelverpackung nach Anspruch 7, wobei das Bahnenmaterial eine coextrudierte Folie ist.

9. Multifunktionelle Lebensmittelverpackung nach Anspruch 8, wobei die coextrudierte Folie mindestens eine Verbindungsschicht umfasst, wobei die Verbindungsschicht die mindestens eine sekundäre Funktion umfasst.

10. Multifunktionelle Lebensmittelverpackung nach Anspruch 7, die ferner eine im Wesentlichen hydrophobe Rückseitenschicht umfasst, die an der zweiten Seite der multifunktionellen Lebensmittelverpackung befestigt ist.

11. Multifunktionelle Lebensmittelverpackung (10, 20, 40, 50, 60, 70), umfassend:
(a) eine Materialbahn (12, 22, 42, 52, 62, 72), die mindestens eine Schicht umfasst, wobei die Materialbahn eine erste aktive Seite und eine zweite Seite hat, wobei die Materialbahn mehrere Vorsprünge (14, 24, 44, 54, 64, 74) umfasst, die mit der ersten aktiven Seite und der zweiten Seite einstückig ausgebildet sind, wobei die Vorsprünge Freiraum (16, 26, 46, 56, 66, 76) dazwischen haben;
(b) ein Haftmittel (18, 28, 48, 58, 68, 78), das auf der ersten aktiven Seite in den Freiräumen zwischen den Vorsprüngen, jedoch nicht auf den Vorsprüngen aufgebracht ist; und
(c) mindestens eine sekundäre Funktion, die in den Vorsprüngen und integral damit angeordnet ist, wobei die sekundäre Funktion ausgewählt ist aus der Gruppe, bestehend aus antimikrobiellem Schutz, Lebensmittelkonservierung, Atmosphärenmodifikation, Geruchsbeseitigung, Anzeige von Produktverschüttung, Gefrierbrandverhinderung, Temperaturanzeige, Nährwert- und diätetischen Vorteilen, Geschmacksverstärkung, Feuchtigkeitsabsorption, Feuchtigkeitbegrenzung, Verbesserung von Mikrowellengarung, Erwärmung, Abkühlung, Produktisolierung und Kombinationen davon.

12. Multifunktionelle Lebensmittelverpackung nach Anspruch 11, wobei das Haftmittel mindestens eine zweite sekundäre Funktion umfasst.

13. Multifunktionelle Lebensmittelverpackung nach Anspruch 12, wobei die Vorsprünge aufbrechbar sind, wobei die mindestens eine sekundäre Funktion infolge einer externen Kraft aus den Vorsprüngen aufgetragen werden können.

14. Multifunktionelle Lebensmittelverpackung nach Anspruch 13, wobei die Vorsprünge ferner einen Bereich umfassen, wobei die mindestens eine sekundäre Funktion infolge der esternen Kraft durch den schwachen Bereich aus dem Vorsprung freigesetzt werden kann.

## Revendications

1. Emballage alimentaire multifonctionnel (10, 20, 40, 50, 60, 70) comprenant :
(a) une nappe de matériau (12, 22, 42, 52, 62, 72) ayant une première face active et une deuxième face, ladite nappe de matériau comprenant une pluralité de parties saillantes (14, 24, 44, 54, 64, 74), lesdites parties saillantes étant solidaires de ladite première face active et de ladite deuxième face, lesdites parties saillantes ayant des espaces (16, 26, 46, 56, 66, 76) entre elles ;
(b) un adhésif (18, 28, 48, 58, 68, 78) disposé sur ladite première face active de ladite nappe de matériau au sein desdits espaces entre lesdites parties saillantes, mais pas sur lesdites parties saillantes ; et,
(c) dans lequel ledit adhésif comprend au moins une fonction secondaire choisie dans le groupe constitué de protection antimicrobienne, conservation des aliments, modification d'atmosphère, élimination d'odeur, indication de dégradation du produit, inhibition de brûlure de congélation, indication de température, effets bénéfiques nutritionnels et diététiques, renforcement de saveur, absorption d'humidité, régulation d'humidité, amélioration de cuisson au micro-ondes, chauffage, refroidissement, isolation du produit, et leurs combinaisons.

2. Emballage alimentaire multifonctionnel selon la revendication 1, dans lequel ladite nappe de matériau est choisie dans le groupe constitué de papier, films polymères, films plastiques, chiffons, tissus, tissés, non-tissés, stratifiés, feuilles métalliques, papiers revêtus, et leurs combinaisons.

3. Emballage alimentaire multifonctionnel selon la revendication 1, dans lequel ladite nappe de matériau comprend, en outre, une deuxième au moins une fonction secondaire étant disposée au sein de ladite feuille de matériau, ladite deuxième au moins une fonction secondaire étant disponible au-delà desdites parties saillantes en réponse à une application d'une force externe sur ledit emballage alimentaire multifonctionnel.

4. Emballage alimentaire multifonctionnel selon la revendication 1, dans lequel ladite nappe de matériau comprend au moins une couche.

5. Emballage alimentaire multifonctionnel selon la revendication 1, dans lequel ladite pluralité de parties saillantes comprend un motif amorphe.

6. Emballage alimentaire multifonctionnel selon la revendication 1, dans lequel ledit adhésif et ladite au moins une fonction secondaire sont disponibles au-delà desdites parties saillantes en réponse à une application d'une force externe sur ledit emballage alimentaire multifonctionnel.

7. Emballage alimentaire multifonctionnel (10, 20, 40, 50, 60, 70) comprenant :
(a) une nappe de matériau (12, 22, 42, 52, 62, 72) comprenant une ou plusieurs couches, ladite nappe de matériau comprenant une première face active et une deuxième face, ladite nappe de matériau comprenant, en outre, une pluralité de parties saillantes (14, 24, 44, 54, 64, 74), lesdites parties saillantes étant solidaires de ladite première face active et de ladite deuxième face, lesdites parties saillantes ayant des espaces (16, 26, 46, 56, 66, 76) entre elles ;
(b) un adhésif (18, 28, 48, 58, 68, 78) disposé sur ladite première face active de ladite nappe de matériau au sein desdits espaces entre lesdites parties saillantes, mais pas sur lesdites parties saillantes ; et,
(c) au moins une fonction secondaire disposée au sein dudit matériau de nappe, dans lequel ladite fonction secondaire est choisie dans le groupe constitué de protection antimicrobienne, conservation des aliments, modification d'atmosphère, élimination d'odeur, indication de dégradation du produit, inhibition de brûlure de congélation, indication de température, effets bénéfiques nutritionnels et diététiques, renforcement de saveur, absorption d'humidité, régulation d'humidité, amélioration de cuisson au micro-ondes, chauffage, refroidissement, isolation du produit, et leurs combinaisons.

8. Emballage alimentaire multifonctionnel selon la revendication 7, dans lequel ledit matériau de nappe est un film coextrudé.

9. Emballage alimentaire multifonctionnel selon la revendication 8, dans lequel ledit film coextrudé comprend au moins une couche de liaison, ladite couche de liaison comprenant ladite au moins une fonction secondaire.

10. Emballage alimentaire multifonctionnel selon la revendication 7, comprenant, en outre, une feuille de dos essentiellement hydrophobe fixée à ladite deuxième face dudit emballage alimentaire multifonctionnel.

11. Emballage alimentaire multifonctionnel (10, 20, 40, 50, 60, 70) comprenant :
(a) une nappe de matériau (12, 22, 42, 52, 62, 72) comprenant au moins une couche, ladite nappe de matériau ayant une première face active et une deuxième face, ladite nappe de matériau comprenant une pluralité de parties saillantes (14, 24, 44, 54, 64, 74) solidaires de ladite première face active et de ladite deuxième face, lesdites parties saillantes ayant des espaces (16, 26, 46, 56, 66, 76) entre elles ;
(b) un adhésif (18, 28, 48, 58, 68,78) disposé sur ladite première face active dans lesdits espaces entre lesdites parties saillantes, mais pas sur lesdites parties saillantes ; et
(c) au moins une fonction secondaire disposée dans lesdites parties saillantes et solidaire desdites, dans lequel ladite fonction secondaire est choisie dans le groupe constitué de protection antimicrobienne, conservation des aliments, modification d'atmosphère, élimination d'odeur, indication de dégradation du produit, inhibition de brûlure de congélation, indication de température, effets bénéfiques nutritionnels et diététiques, renforcement de saveur, absorption d'humidité, régulation d'humidité, amélioration de cuisson au micro-ondes, chauffage, refroidissement, isolation du produit, et leurs combinaisons.

12. Emballage alimentaire multifonctionnel selon la revendication 11, dans lequel ledit adhésif comprend une deuxième au moins une fonction secondaire.

13. Emballage alimentaire multifonctionnel selon la revendication 12, dans lequel lesdites parties saillantes peuvent être rompues, ladite au moins une fonction secondaire étant disponible à partir desdites parties saillantes en réponse à une force externe.

14. Emballage alimentaire multifonctionnel selon la revendication 13, dans lequel lesdites parties saillantes comprennent, en outre, une région faible, ladite au moins une fonction secondaire pouvant être libérée à partir de ladite partie saillante à travers ladite région faible en réponse à ladite force externe.
